# EUROPEAN PATENT SPECIFICATION

(11) **EP 2 516 245 B1**
(45) Date of publication and mention of the grant of the patent: **18.06.2014**
(21) Application number: 10839979.1
(22) Date of filing: 07.12.2010
(51) Int. Cl.: B62J 11/00

(54) **SYSTEM FOR REMOVABLY ATTACHING OBJECTS TO VEHICLES NEGATING THE EFFECTS OF GRAVITATIONAL FORCES, VIBRATION AND SHOCK LOADING**
SYSTEM ZUR VORÜBERGEHENDEN ANBRINGUNG VON OBJEKTEN AN FAHRZEUGEN ZUR DÄMPFUNG DER WIRKUNG VON SCHWERKRAFT, VIBRATION UND STÖSSEN
SYSTÈME DE FIXATION AMOVIBLE D'OBJETS À DES VÉHICULES ANNIHILANT LES EFFETS DES FORCES GRAVITATIONNELLES, LES VIBRATIONS ET LES CHOCS AU CHARGEMENT

(30) Priority: 22.12.2009 US 644853
(43) Date of publication of application: 31.10.2012
(73) Proprietor: Brown, Gregory M., Erie, CO 80516 (US); Kondilas, Robert A., Bethesda, MD 20814 (US)
(72) Inventor: Brown, Gregory M., Erie, CO 80516 (US); Kondilas, Robert A., Bethesda, MD 20814 (US)
(74) Representative: Dennemeyer & Associates S.A.
(86) International application number: PCT/US2010/059284
(87) International publication number: WO 2011/078964

(56) References cited:
- WO-A1-00/49919
- WO-A1-03/084805
- WO-A1-03/084805
- WO-A1-2009/063314
- WO-A2-2008/089498
- DE-A1-102005 019 035
- GB-A- 976 555
- US-A- 4 366 922
- US-A- 4 858 869
- US-A- 5 105 958
- US-A- 5 484 128
- US-A- 5 624 064
- US-A- 5 624 064

## Description

### Field of the Invention

This invention generally relates to removably attaching objects to vehicles.

### Background of the invention

Bicycles for a considerable time now have been manufactured with two sets of evenly spaced and threaded holes in the bicycle frame used for attaching cages which typically hold water bottles. These cages are typically round or elliptical in design and mirror the shape of the item to be seated and held in the cage.

The bottle is mounted in a location on the frame where a rider can reach and grab the bottle and remove it from its cage. After taking a drink, the rider replaces the bottle in the cage. This operation of removing and replacing the bottle from and into the cage is frequently performed while the rider is riding the bicycle, with both feet on the bicycle pedals.

During a typical ride, the bicycle is subjected to various forces such as gravity, vibration and shock. The cage must hold the bottle securely, even under the various forces encountered. Yet, the cage must also allow the rider to remove the bottle while riding.

There are many drawbacks to the current water bottle design including: limiting the freedom of shape of the objects to be attached to mirror the cage, requiring an extended and lengthy physical interference fit to get the object in or out of the cage by a long push or pull, limiting the height of objects which could be put in smaller spaces, and an inability to securely hold lighter objects or objects which may become lighter over time. For example, with a water bottle, during a bicycle ride, the mass of the bottle lessens as the rider consumes the contents. In prior art designs, empty or near empty bottles tend to eject from the holder on a more frequent basis than full ones: as the bicycle encounters rough surface conditions, such as cobblestone streets.

While some prior designs have incorporated different physical features and combined the use of magnetic forces, none have created a system that provides a zero interference fit that negates gravitational forces, vibration, and shock loading.

Further prior art referring to this technical field can be found in document WO 2008/089498 A2, which shows in Figs. 1-5 a holder with an open configuration. A can in the holder can move up, can be pulled out, can be rotated about its longitudinal axis. Only the holder has a magnet, not the can. Vehicles such as bicycles are subject to vibration and shock when traveling. For example, if a bicycle tire hits a pothole, then the frame undergoes shock. With a conventional mount such as in document WO 2008/089498 A2, the shock would jar the object loose.

The document US 5105958 describes an apparatus suitable for mounting a cylindrical object to a bracket on a vehicle according to the preamble of claim 1.

### Brief Description of the Drawings

Fig. 1 is a side view of the water bottle object and bracket of the present invention, in accordance with a preferred embodiment, mounted to a bicycle.
Figs, 2A-2C show the object. Fig. 2A is a side view of the object. Fig. 2B is another side view of the object, taken at lines IIB-IIB of Fig. 2A. Fig. 2C is a bottom view of the object.
Figs. 3A-3F are views of the bracket. Fig. 3A is a perspective view. Fig. 3B is an end view. Fig. 3C is a front side view. Fig. 3D is a left side view (referring to the orientation of Figs. 3A and 3C). Fig. 3E is a rear side view. Fig. 3F is a cross-sectional view taken at lines IIIF-IIIF of Fig. 3C.
Fig. 4 is a side view showing the object in partial cross-section mounted onto the bracket.
Fig. 5 is a cross-sectional view, taken at lines V-V of Fig. 4.
Fig. 6 is a view taken at lines VI-VI of Fig. 4.
Figs. 7A-7C show the object in accordance with another embodiment. Fig. 7A is a side view of the object. Fig. 7B is another side view of the object, rotated 45 degrees from the view of Fig. 7A. Fig. 7C is a perspective view.
Figs. 8A-8D show the bracket in accordance with another embodiment. Fig. 8A is a side view of the bracket. Fig. 8B is another side, or edge, view of the bracket. Fig. 8C is a top view. Fig. 8D is a perspective view.
Figs. 9A-9D show the bracket in accordance with still another embodiment. Fig. 9A is a side view. Fig. 9B is another side, or edge, view. Fig. 9C is a top view. Fig. 9D is a perspective view.

### Description of the Preferred Embodiment

The present invention removably couples an object to a vehicle in a manner that both securely holds the object, even when subjected to gravitational forces, vibration and shock loading that the vehicle and the object may encounter, yet allows easy removal of the object.

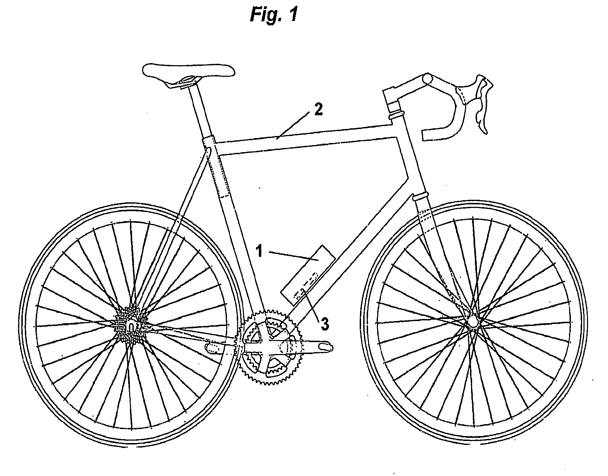

Fig. 1 shows the object 1 mounted securely to a vehicle 2 by way of a bracket 3. The bracket 3 and the object 1 cooperate with each other.

In the description that follows, the object 1 is referred to as a bottle, suitable for carrying water or other liquids. However, the object could be other items, such as an electronic device (telephone, mapping device, radio, music player, etc.), a flashlight, equipment (such as a bicycle pump or bicycle repair kit), etc. Likewise, while in the description that follows, the vehicle 2 is referred to as a bicycle. However, the vehicle could be a motorcycle, an all-terrain vehicle (such as a four wheeler), an automobile, an aircraft, a boat or ship, etc. Also, like reference numbers from one embodiment to another indicates like components.

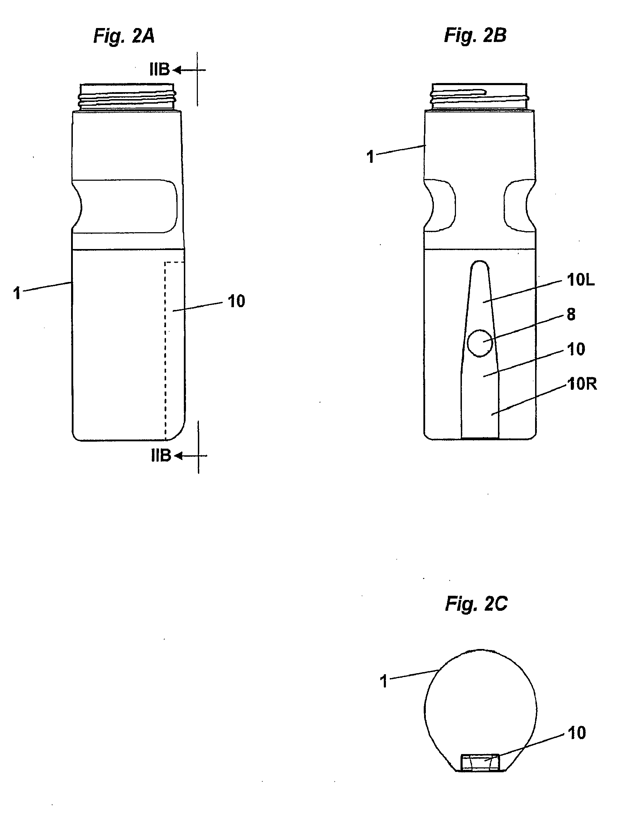

Referring to Figs. 2A-2C, the bottle 1 has an exterior. The exterior has a cavity 10 therein. The cavity 10 will be described in more detail below in conjunction with the bracket 3. While the shape of the cavity 10 is dependent upon the shape of the bracket 3, as will be explained, the shape of the remainder of the bottle, or object, exterior is independent of the shape of the bracket. Thus, the bottle exterior can be generally cylindrical or some other shape. The bottle has an interior cavity for holding liquids and an open top. A cap, or lid, not shown, couples to the top.

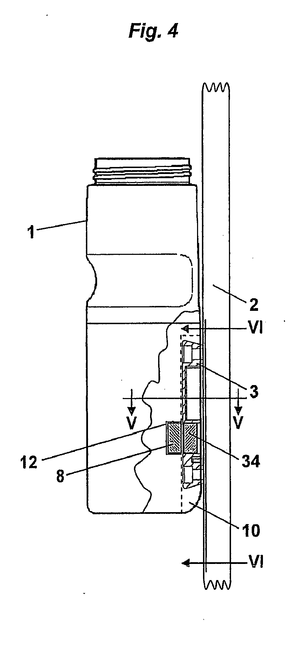

The exterior cavity 10 has a subcavity 12 (see Fig. 4) therein for receiving a magnet 8. The subcavity is open to the cavity 10 and the exterior, although the subcavity could be open to the interior of the object.

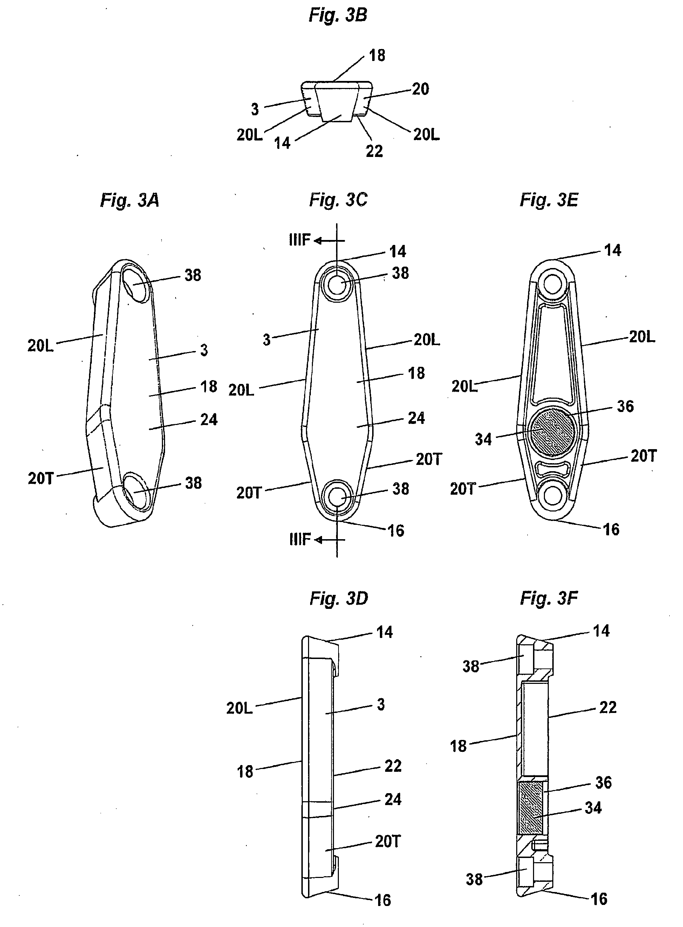

The bracket 3 is shown in Figs. 3A-3F. The bracket 3 is generally elongated between two ends 14, 16. For convenience, the ends are referred to as a leading end 14 and a trailing end 16, named for reference to when the bracket is inserted into the cavity. The bracket 3 has a first surface 18 that extends between the two ends and side surfaces 20 that depend from the first surface to a base 22, which base is opposite the first surface. The side surfaces 20 extend between the two ends. The first surface 18 is generally flat and smooth. The edges where the first surface 18 merges with the side surfaces 20 can be rounded. In the preferred embodiment, there are two side surfaces on each side of the bracket due to a wide intermediate portion 24 relative to the ends 14, 16. Thus, for each side, there is a leading side surface 20L and a trailing side surface 20T. The leading side surfaces 20L extend from the wide intermediate portion 24 to the leading end 14, while the trailing side surfaces 20T extend from the wide intermediate portion to the trailing end 16. Thus, the bracket forms something of a back-to-back wedge, with one wedge formed by the leading side surfaces 20L and their respective adjacent portion of the first surface 18 and the other wedge formed by the trailing side surfaces 20T and the respective adjacent portion of the first surface 18.

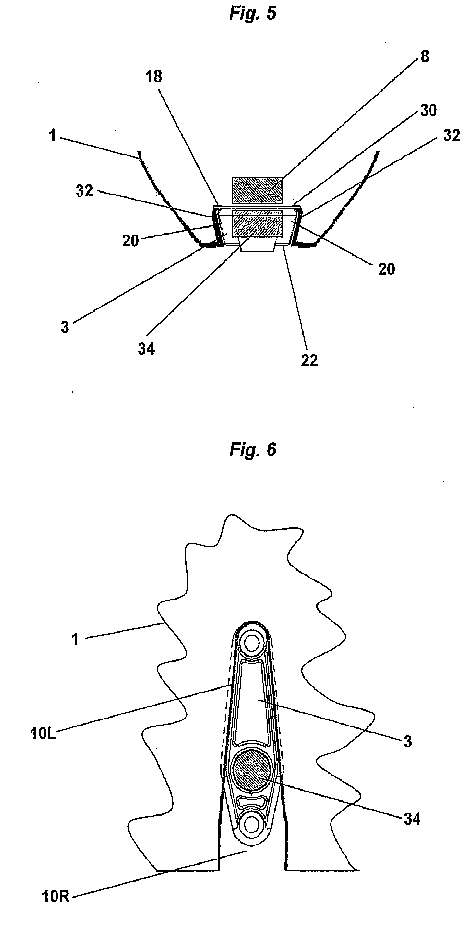

Furthermore, the side surfaces 20L, 20T are sloped inwardly as they extend from the first surface 18 to the base 22. This is shown in Figs. 3B and 5. This inward slope makes the first surface 18 wider, from side-to-side, than the base 22. The inward slope of the side surfaces 20L, 20T is also referred to herein as negatively tapered side surfaces.

The cavity 10 on the object 1 has a shape that matches the shape of the bracket or at least a portion of the bracket. In the preferred embodiment cavity, the cavity 10 has a second surface 30 that is located adjacent to the bracket first surface 18 when the bracket 3 is located inside of the cavity 10. The cavity 10 also has side surfaces 32 of the same orientation, sloped inwardly or negatively, as the bracket side surfaces 20.

The cavity 10 has two portions, namely a leading portion 10L and a receiving portion 10R. The leading portion 10L of the cavity is shaped to match the wedge shape of the leading portion, with the leading side surfaces 20L, of the bracket 3. The receiving portion 10R of the cavity is wide enough to receive the widest portion 24 of the bracket 3. The receiving portion 10R is rectangular shape when viewed from the orientation shown by Figs. 2B and 6. The trailing portion, with the trailing side surfaces 20T, of the bracket 3 need not serve a purpose in fitting with the cavity and can be of any shape (wedge, rounded, etc.) that fits within the cavity 10. The cavity 10 is sized slightly larger than the bracket 3 so that the bracket can be moved in and out of the cavity. There need not be an interference or friction fit between the bracket and the cavity as the bracket is inserted into the cavity.

The bracket 3 is provided with a magnet 34. In the preferred embodiment, the bracket 3 has a cavity 36 in the base for receiving the magnet. The magnet cavity is open at the base 22 and is closed by a wall that forms the first surface 18. The first surface wall provides protection of the magnet. The magnet could be exposed at the first surface.

The bracket 3 is provided with holes 38 at the end 14, 16 portions, which holes receive screws or other fasteners for mounting the bracket to the vehicle 2.

In the preferred embodiment, the object 1 can be made out of a variety of materials, such as plastic, metal or wood. For example, the object can be made out of polyethylene, polypropylene, vinyl, nylon, rubber, various impregnated or laminated fibrous materials, various plasticized materials, etc. The material should be suitable for repeated matings between the object and the bracket. In the preferred embodiment, the bracket 3 can also be made of material such as plastic, metal or wood. For example, the bracket can be made from carbon or a carbon composite, such as acrylonitrile butadiene styrene (ABS), which provides stiffness and resistance to ultraviolet (UV) rays and moisture. The materials that are used in the bracket and object do not interfere with the operation of the magnets.

The magnets 8, 34 are, in the preferred embodiment, conventional and commercially available. The magnets can be of various types and shapes. For example, the magnets can be of the rare earth type (neodymium or samarium cobalt), ceramic or alnico. The magnets can be shaped like a disc, a rod, a sheet, etc. In the preferred embodiment, the magnets are of the rare earth type and are disc shaped. The magnets 8, 34 are arranged so that when the bracket is received in the bottle cavity, the magnets attract each other.

Although two magnets can be used, this need not be the case. Instead, one magnet (such as 8) and a magnetic material (such as 34) can be used. The magnetic material is a material that is attracted to a magnet and permits a holding power to be developed between the magnet and the magnetic material. An example of a magnetic material is a ferromagnetic material such as steel. The two magnets, or one magnet and one magnetic material, make up a magnetic pair 8, 34. The magnet of a magnetic pair can be on one of the bottle or on the bracket, while the magnetic material is on the other of the bracket of the bottle.

In use, the bracket 3 is mounted to the vehicle 2. For example, screws are inserted into the holes 38 and screwed into the frame (such as the down tube of a bicycle). Various other fasteners or adhesives can be used to secure the bracket to the vehicle. On a boat or ship, the bracket 3 can be mounted to a bulkhead, gunwale, etc. On an airplane, the bracket can be mounted to the back of a seat, a bulkhead, etc.

Before mounting the bracket, the magnet 34 is inserted into its receptacle or cavity 36. The magnetic pair 8, 34 can be retained in their respective cavities by either an interference fit or by an adhesive.

Once the bracket 3 is mounted to the vehicle, the object 1 is mounted to the bracket by inserting the bracket into the receiving portion 10R of the object cavity and then sliding the object onto the bracket so that the bracket is located within the leading portion 10L. The magnetic pair 8, 34, which attract one another, pull the bracket into the leading portion 10L of the cavity and effectively create a close, tight fit between the object and the bracket. When the object stops moving with respect to the bracket, the bracket 3 is seated with the cavity 10. When seated, it is preferable if the two components of the magnetic pair are directly opposite of each other to achieve the maximum holding power between them. Mechanical stops can be optionally provided. One such mechanical stop has the leading end 14 of the bracket 3 contacting the closed end of the leading portion 10L of the cavity. Still another stop has the bracket sides 20L wedged into the sides of the cavity. One or both types of stops can be used. The two surfaces 18, 30 may be pulled into contact with one another if tolerances between the cavity and the bracket permit.

Before mounting the object to the bracket, the object has 6 degrees of freedom, namely (when viewed vertically), up, down, right, left, in and out. When the object is mounted to the bracket, by for example, pushing the object down on the bracket, the object is unable to move down, right, left, in or out, being constrained by the bracket. The object cannot pull out (or to the left referring to the orientation of Fig. 4) because of the negative taper of the side walls. The object has only one degree of freedom, namely up, but this is resisted by the attraction between the magnetic pair 8, 34.

The arrangement of the bracket 3 and object 1 secures the object to the vehicle, even when the object is exposed to forces such as gravitational, vibrational and shock loading, which forces are due to, for example, motion of the vehicle. For example, the bicycle may hit a pothole with one of its wheels and be subjected to a shock of sudden up and down movements. Also, the bicycle can ride over a rough road or path such as paved by cobblestones and encounter vibration. Nevertheless, the object remains firmly secured to the bracket.

To remove the object from the bracket, force is applied to the object in the direction of the remaining degree of freedom. For example, with the water bottle, the bottle is lifted up. Once the bottle is clear of the bracket, it can be moved in any direction. The amount of force required is sufficient to overcome the strength of the magnetic pair.

The magnetic holding power can be selected to provide more or less holding power by selecting the magnet material, shape, size and strength. Heavier objects require stronger magnetic forces.

Thus, the bracket has a first shape, while the object cavity has a second shape, with the cavity second shape cooperating with the first shape to limit movement of the object relative to the bracket to a single degree of freedom when the bracket is seated in the cavity. The first shape need not be on the bracket but may be on the object. Likewise, the cavity need not be on the object but can be on the bracket.

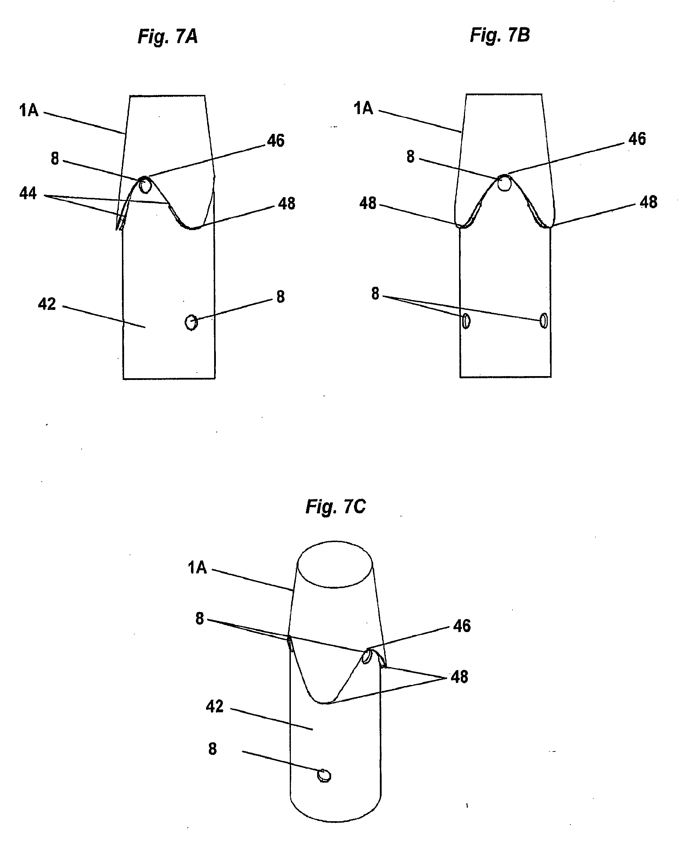

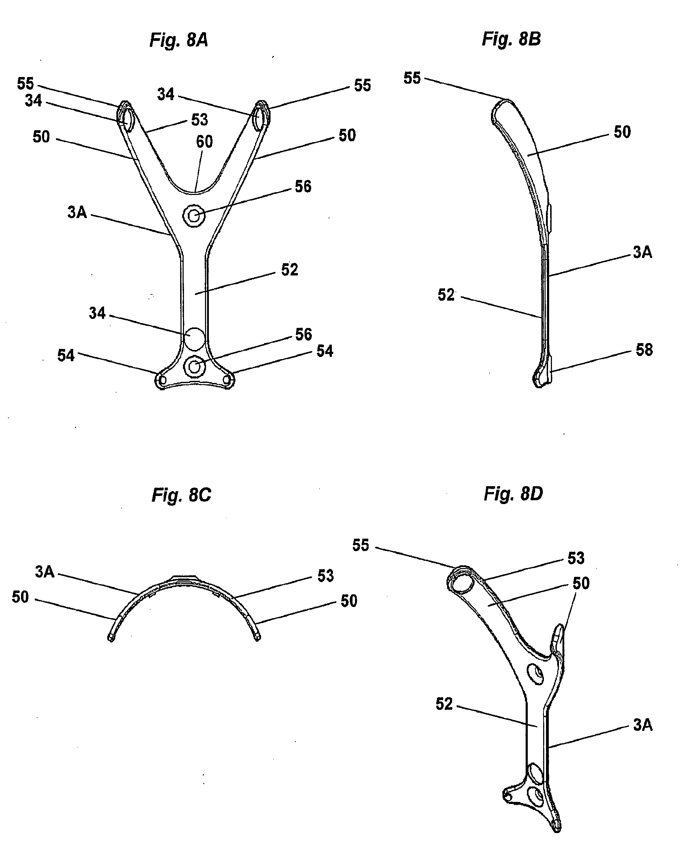

Figs 7A-7C and 8A-8D show the object and bracket in accordance with another embodiment. The object 1A has the first shape, while the bracket 3A has the second shape and cavity.

The object 1A is shaped like a cylinder 42 for part of its length. The object has an undulating or wavelike edge 44 that is generally transverse to the cylindrical surface 42. The undulating edge 44 forms peaks 46 and valleys 48 between the peaks (referring to the upright orientation shown in Figs. 7A-7C). A magnet 8 is located on the cylindrical portion 42 at each peak 46. In addition, a magnet 8 may optionally be located on the cylindrical portion, longitudinally spaced from each valley 48.

The corresponding bracket 3B is generally Y-shaped as shown in Fig. 8A. The bracket 3A has two arms 50 and a stem 52. The arms have edges 53. The base of the stem 52 has short stabilizing arms 54. The bracket has magnets 34 located near the free ends 55 of the arms 50 and in the stem 52. The bracket magnets 34 and object magnets 8 are located so as to be adjacent to each other when the bracket receives the object. The bracket 3A has openings 56 for receiving mounting screws. The bracket is curved to match the cylindrical object 1A, as can be seen in Figs. 8B and 8C. Fig. 8B shows the back 58 (or right side referring to the orientation in the figure) as straight to allow the bracket to be mounted to a straight support, such as a bicycle down tube or a wall.

The object 1A is mounted to the bracket 3A as follows, with the bracket having already been located on a bicycle, wall, etc.: if the bracket 3A is oriented as shown in Figs. 8A and 8B, the object 1A is located above the bracket and moved into the arms 50 so that the arms contact the cylinder portion 42 of the object. The object is then moved down so that the valley 48 is received by the space 60 between the bracket arms 50 and the free ends 55 of the bracket arms 50 are received by the peaks 46 of the object 1A. The upper edges 53 of the arms 50 contact the undulating edge 44 of the object. The magnets 8 of the object 1A are aligned with and adjacent to the magnets 34 of the bracket 3A. The magnets attract one another.

The object 1A has a first shape in the form of the valley 48 and the corresponding portion of the edge 44. The valley 48 and corresponding edge 44 form a protuberance. This first shape fits into the cavity 60 of the bracket, which cavity is formed by the two arms 50 and the top of the stem 52. The cavity 60 has a second shape that receives the object's first shape.

Furthermore, the bracket has a third shape in the form of the arms 50, while the object has cavities, one for each arm. Each object cavity is formed by the peak 46 and the edge 44.

Thus, with regard to the embodiment of Figs. 7A-8D, the first shape can be on one of the obj ect or the bracket while the cavity is on the other of the object or the cavity.

When the object 1A is mounted to the bracket 3A, it has only one degree of freedom, namely up (with reference to the orientation of Fig. 8A) to release from the bracket. This motion is resisted by the attraction between the magnet pairs 8, 34.

The object can be provided with plural valleys 48, or undulations; this allows the user to mount the object to the bracket using any one of the valleys 48. Thus, the object is easier to mount because one of three mounts can be used.

The edges 44, 53 of the object 1A in the bracket 3A can be sloped negatively as discussed above with respect to Figs. 3B and 5.

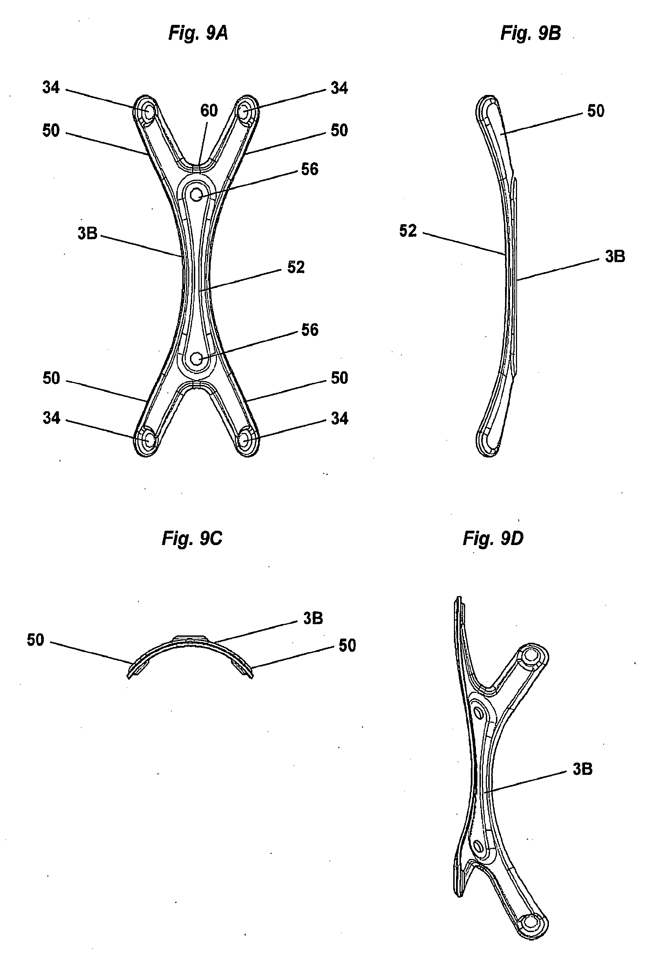

Figs. 9A-9D show the bracket 3B in accordance with another embodiment. This bracket has two y-shaped portions, which are substantially similar to the bracket of Figs. 8A-8D. The y-shaped portions of the bracket 3B are joined at the stems. Thus, the bracket has two pairs of arms 50, each pair of which can receive an object. The bracket can receive one object in two different orientations or it can mount two objects.

An embodiment of the present invention may provide one or more advantages. One advantage already mentioned is the freedom to shape the object independently of the bracket.

The distance to engage or disengage the object onto and from the bracket is short. In the prior art, when a cage is used to contain a water bottle, the bottle must travel the length of the cage to become engaged or disengaged. However, with the object and bracket arrangement, the distance to engage or disengage is the distance between the bracket magnet and the length of travel needed to pull the object off of the bracket. This distance can be designed so that the two components of the magnetic pair break free of one another when the bracket is positioned so as to pull free of the object cavity. For example, with a water bottle using the bracket arrangement described herein, the distance is about 1 inch, whereas for a conventional water bottle with a basket, the distance to engage or disengage is about 3 to 4 inches. Because the distance required to engage or disengage the object is significantly reduced, the clearance needed for the object is smaller. This smaller clearance allows a larger object to be located in a tighter space. For example, a small sized bicycle has a small frame. Using the prior art, a full size water bottle cannot be attached to the down tube of a small sized bicycle because there is insufficient clearance between the bottle and the top tube to allow insertion of the bottle into the cage. With the arrangement, a full sized water bottle can be mounted to a small bicycle frame down tube.

The object can be put onto the bracket without the need to exert a force onto the bracket. The two components of the magnetic pair attract each other and provide a pulling force to mate or seat the object onto the bracket. Because of the magnetic force, the object can seat itself on the bracket, thereby providing a physical cue that the object has properly mated. Thus, the user need not push on the object to seat it onto the bracket so as to create an interference fit as is required by prior art arrangements.

The holding power of the magnetic force becomes proportionally stronger as the mass of the object decreases. Thus, as the object becomes lighter in mass, the holding power of the magnetic pair becomes stronger as there is less mass to hold. This is opposite of many prior art arrangements. For example, with a water bottle, as the contents are consumed, the mass decreases. The magnetic pair more easily keep the bottle in place as the mass decreases, even as the bicycle encounters rough roads or terrain.

Although the bracket and object have been described as having negatively tapered side surface, the taper can either be zero or positive.

The foregoing disclosure and showings made in the drawings are merely illustrative of the principles of this invention and are not to be interpreted in a limiting sense.

## Claims

1. An apparatus for mounting a cylindrical object (19) to a bracket (3) on a vehicle (2), wherein:
a) one of the object or the bracket having a projection (18, 20) with a first shape, the projection having a first surface and two side surfaces that extend from the first surface, the first surface and the two side surfaces extending between two ends;
b) the other of the object or the bracket having a cavity (10), the cavity having a second surface and two side surfaces that extend from the second surface, the cavity having an open end between the two cavity side surfaces;
c) the projection capable of being seated in the cavity by passing one of the projection ends through the cavity open end, with the first and second surfaces sliding adjacent to each other as the projection is seated in the cavity and the projection side surfaces being adjacent to the cavity side surfaces, the cavity has a second shape that cooperates with the projection first shape so as to limit movement of the projection relative to the cavity to a single degree of freedom when the projection is seated in the cavity, which degree of freedom is the projection sliding out of the cavity open end with the first surface sliding relative to the second surface, **characterized in that**:
d) a magnetic pair (8, 34) comprising at least a first magnet and a second magnetic material, with the first magnet being located on one of the projection or the cavity and the second magnetic material being located on the other of the cavity or the projection, the first magnet and the second magnetic material being arranged so as to attract each other when the projection is seated in the cavity.

2. The object mounting apparatus of claim 1, wherein the projection and the cavity have negatively tapered side surfaces.

3. The object mounting apparatus of claim 2, wherein the projection and the cavity are wedge shaped.

4. The object mounting apparatus of claim 1, wherein the projection and the cavity are wedge shaped.

5. The object mounting apparatus of claim 4, further comprising a stop for limiting movement in the degree of freedom that is opposite of the single degree of freedom.

6. The object mounting apparatus of claim 5, wherein the stop comprises an end of the first shape and an end of the cavity.

7. The object mounting apparatus of claim 5, wherein the stop comprises a wedge.

8. The object mounting apparatus of claim 1, wherein the object comprises a water bottle.

9. The object mounting apparatus of claim 8, wherein the vehicle comprises a bicycle.

10. The object mounting apparatus of claim 1, wherein the vehicle comprises a bicycle.

11. The object mounting apparatus of claim 1, wherein the bracket has the projection and the object has the cavity.

12. The object mounting apparatus of claim 1, wherein the bracket has the cavity and the object has the projection.

13. The object mounting apparatus of claim 1, wherein the first and second surfaces are smooth.

14. The object mounting apparatus of claim 1, wherein the first magnet is located on one of the first or second surfaces and the second magnetic material is located on the other of the first or second surfaces.

## Patentansprüche

1. Vorrichtung zum Befestigen eines zylindrischen Objekts (19) an einem Träger (3) auf einem Fahrzeug (2), wobei:
a) eines des Objekts oder des Trägers einen Vorsprung (18, 20) mit einer ersten Form aufweist, wobei der Vorsprung eine erste Oberfläche und zwei Seitenflächen aufweist, die sich von der ersten Oberfläche erstrecken, wobei sich die erste Oberfläche und die beiden Seitenflächen zwischen zwei Enden erstrecken;
b) das andere des Objekts oder des Trägers einen Hohlraum (10) aufweist, wobei der Hohlraum eine zweite Oberfläche und zwei Seitenflächen aufweist, die sich von der zweiten Oberfläche erstrecken, wobei der Hohlraum ein offenes Ende zwischen den beiden Hohlraum-Seitenflächen aufweist;
c) der Vorsprung in der Lage ist, in den Hohlraum eingesetzt zu werden, indem eines der Vorsprungenden durch das offene Hohlraumende geführt wird, wobei die ersten und zweiten Oberflächen einander benachbart gleiten, während der Vorsprung in den Hohlraum eingesetzt wird, und wobei die Vorsprung-Seitenflächen benachbart den Hohlraum-Seitenflächen sind, wobei der Hohlraum eine zweite Form aufweist, die mit der ersten Form des Vorsprungs zusammenwirkt, um die Bewegung des Vorsprungs in Bezug auf den Hohlraum auf ein einzelnes Freiheitsgrad einzuschränken, wenn der Vorsprung in den Hohlraum eingesetzt ist, wobei der Freiheitsgrad der Vorsprung ist, der aus dem offenen Hohlraumende gleitet, wobei die erste Oberfläche in Bezug auf die zweite Oberfläche gleitet, **dadurch gekennzeichnet, dass**
d) ein magnetisches Paar (8, 34) zumindest einen ersten Magneten und ein zweites magnetisches Material umfasst, wobei der erste Magnet an einem des Vorsprungs oder des Hohlraums angeordnet ist, und wobei das zweite magnetische Material am anderen des Hohlraums oder des Vorsprungs angeordnet ist, wobei der erste Magnet und das zweite magnetische Material so angeordnet sind, dass sie einander anziehen, wenn der Vorsprung in den Hohlraum eingesetzt ist.

2. Objektbefestigungsvorrichtung nach Anspruch 1, wobei der Vorsprung und der Hohlraum negativ verjüngte Seitenflächen aufweisen.

3. Objektbefestigungsvorrichtung nach Anspruch 2, wobei der Vorsprung und der Hohlraum keilförmig sind.

4. Objektbefestigungsvorrichtung nach Anspruch 1, wobei der Vorsprung und der Hohlraum keilförmig sind.

5. Objektbefestigungsvorrichtung nach Anspruch 4, die darüber hinaus einen Anschlag für das Einschränken der Bewegung im Freiheitsgrad umfasst, der gegenüber dem einzelnen Freiheitsgrad liegt.

6. Objektbefestigungsvorrichtung nach Anspruch 5, wobei der Anschlag ein Ende der ersten Form und ein Ende des Hohlraums umfasst.

7. Objektbefestigungsvorrichtung nach Anspruch 5, wobei der Anschlag einen Keil umfasst.

8. Objektbefestigungsvorrichtung nach Anspruch 1, wobei das Objekt eine Wasserflasche umfasst.

9. Objektbefestigungsvorrichtung nach Anspruch 8, wobei das Fahrzeug ein Fahrrad umfasst.

10. Objektbefestigungsvorrichtung nach Anspruch 1, wobei das Fahrzeug ein Fahrrad umfasst.

11. Objektbefestigungsvorrichtung nach Anspruch 1, wobei der Träger den Vorsprung aufweist und das Objekt den Hohlraum aufweist.

12. Objektbefestigungsvorrichtung nach Anspruch 1, wobei der Träger den Hohlraum aufweist und das Objekt den Vorsprung aufweist.

13. Objektbefestigungsvorrichtung nach Anspruch 1, wobei die ersten und zweiten Oberflächen glatt sind.

14. Objektbefestigungsvorrichtung nach Anspruch 1, wobei der erste Magnet an einer der ersten oder zweiten Oberflächen angeordnet ist, und wobei das zweite magnetische Material an der anderen der ersten oder zweiten Oberflächen angeordnet ist.

## Revendications

1. Appareil pour monter un objet cylindrique (19) sur un support (3) sur un véhicule (2), dans lequel :
a) l'un parmi l'objet ou le support ayant une saillie (18, 20) avec une première forme, la saillie ayant une première surface et deux surfaces latérales qui s'étendent à partir de la première surface, la première surface et les deux surfaces latérales s'étendant entre deux extrémités ;
b) l'autre parmi l'objet ou le support ayant une cavité (10), la cavité ayant une seconde surface et deux surfaces latérales qui s'étendent à partir de la seconde surface, la cavité ayant une extrémité ouverte entre les deux surfaces latérales de cavité ;
c) la saillie pouvant être installée dans la cavité en faisant passer l'une des extrémités de saillie par l'extrémité ouverte de la cavité, avec les première et seconde surfaces coulissant de manière adjacente l'une par rapport à l'autre lorsque la saillie est installée dans la cavité et les surfaces latérales de saillie étant adjacentes aux surfaces latérales de cavité, la cavité a une seconde forme qui coopère avec la première forme de saillie afin de limiter le mouvement de la saillie par rapport à la cavité à un seul degré de liberté lorsque la saillie est installée dans la cavité, lequel degré de liberté est la saillie coulissant hors de l'extrémité ouverte de cavité avec la première surface qui coulisse par rapport à la seconde surface, **caractérisé en ce que** :
d) une paire magnétique (8, 34) comprenant au moins un premier aimant et un second matériau magnétique, avec le premier aimant qui est positionné sur l'une parmi la saillie ou la cavité et le second matériau magnétique qui est positionné sur l'autre parmi la cavité ou la saillie, le premier aimant et le second matériau magnétique étant agencés afin de s'attirer lorsque la saillie est installée dans la cavité.

2. Appareil de montage d'objet selon la revendication 1, dans lequel la saillie et la cavité ont des surfaces latérales progressivement rétrécies négativement.

3. Appareil de montage d'objet selon la revendication 2, dans lequel la saillie et la cavité sont en forme de cale.

4. Appareil de montage d'objet selon la revendication 1, dans lequel la saillie et la cavité sont en forme de cale.

5. Appareil de montage d'objet selon la revendication 4, comprenant en outre une butée pour limiter le mouvement dans le degré de liberté qui est l'opposé du degré de liberté unique.

6. Appareil de montage d'objet selon la revendication 5, dans lequel la butée comprend une extrémité de la première forme et une extrémité de la cavité.

7. Appareil de montage d'objet selon la revendication 5, dans lequel la butée comprend une cale.

8. Appareil de montage d'objet selon la revendication 1, dans lequel l'objet comprend une bouteille d'eau.

9. Appareil de montage d'objet selon la revendication 8, dans lequel le véhicule comprend une bicyclette.

10. Appareil de montage d'objet selon la revendication 1, dans lequel le véhicule comprend une bicyclette.

11. Appareil de montage d'objet selon la revendication 1, dans lequel le support a la saillie et l'objet a la cavité.

12. Appareil de montage d'objet selon la revendication 1, dans lequel le support a la cavité et l'objet a la saillie.

13. Appareil de montage d'objet selon la revendication 1, dans lequel les première et seconde surfaces sont lisses.

14. Appareil de montage d'objet selon la revendication 1, dans lequel le premier aimant est positionné sur l'une des première ou seconde surfaces et le second matériau
